# EUROPÄISCHE PATENTSCHRIFT

(11) **EP 4 171 892 B1**
(45) Veröffentlichungstag und Bekanntmachung des Hinweises auf die Patenterteilung: **17.07.2024**
(21) Anmeldenummer: 21742307.8
(22) Anmeldetag: 22.06.2021
(51) Int. Cl.: B25J 9/10, B25J 9/12, B25J 19/00, F16C 17/02, F16D 63/00, F16H 1/06, H02K 7/14, F16C 17/04, F16C 17/10, F16C 33/12

(54) **ANTRIEBSVORRICHTUNG MIT EINER EIN LICHTSTABILISIERTES DYNAMISCHES MATERIAL AUFWEISENDEN ANTRIEBSKOMPONENTE UND ROBOTER**
DRIVE DEVICE COMPRISING A DRIVE COMPONENT THAT HAS A LIGHT-STABILISED DYNAMIC MATERIAL, AND ROBOT
DISPOSITIF D'ENTRAÎNEMENT DOTÉ D'UN COMPOSANT D'ENTRAÎNEMENT PRÉSENTANT UN MATÉRIAU DYNAMIQUE STABLE À LA LUMIÈRE ET ROBOT

(30) Priorität: 29.06.2020 DE 102020208063
(43) Veröffentlichungstag der Anmeldung: 03.05.2023
(73) Patentinhaber: KUKA Deutschland GmbH, 86165 Augsburg (DE)
(72) Erfinder: KEIBEL, Andreas, 86161 Augsburg (DE)
(74) Vertreter: Oelke, Jochen
(86) Internationale Anmeldenummer: PCT/EP2021/066937
(87) Internationale Veröffentlichungsnummer: WO 2022/002686

(56) Entgegenhaltungen:
- US-A1- 2020 101 595
- DATABASE MEDLINE [online] US NATIONAL LIBRARY OF MEDICINE (NLM), BETHESDA, MD, US; 7 August 2019 (2019-08-07), HOUCK HANNES A ET AL: "Light-Stabilized Dynamic Materials.", XP002804524, Database accession no. NLM31240918
- HOUCK HANNES A ET AL: "Light-Stabilized Dynamic Materials.", JOURNAL OF THE AMERICAN CHEMICAL SOCIETY, vol. 141, no. 31, 7 August 2019 (2019-08-07), pages 12329 - 12337, XP002804597, ISSN: 1520-5126, DOI: 10.1021/jacs.9b05092

## Beschreibung

Die Erfindung betrifft eine Antriebsvorrichtung, aufweisend wenigstens einen Motor und wenigstens eine weitere Antriebskomponente aus der Gruppe von einem Getriebe, einem Drehmomentwandler, einer Kupplung und/oder einer Bremse, und aufweisend eine Steuervorrichtung, die ausgebildet ist zum automatischen Ansteuern des wenigstens einen Motors. Die Erfindung betrifft auch einen Roboter mit wenigstens einer solchen Antriebsvorrichtung.

Die WO 2015/067623 A2 beschreibt einen Industrieroboter aufweisend eine Robotersteuerung, die ausgebildet und/oder eingerichtet ist, ein Roboterprogramm auszuführen, sowie aufweisend einen Manipulatorarm mit mehreren Gliedern, die über Gelenke verbunden sind, die gemäß des Roboterprogramms automatisiert oder in einem Handfahrbetrieb automatisch verstellbar sind, und aufweisend wenigstens einen von der Robotersteuerung ansteuerbaren elektrischen Antrieb, der ausgebildet ist, wenigstens eines der Gelenke zu verstellen. Der elektrische Antrieb weist dabei auf, einen elektrischen Motor, der ein Motorgehäuse, eine mittels wenigstens zweier Wälzlager drehbar gelagerte Antriebswelle, einen im Motorgehäuse festgelegten Stator und einen mit der Antriebswelle verbundenen, im Motorgehäuse drehbaren Rotor umfasst, und ein Spannungswellengetriebe, das ein Getriebegehäuse, einen starren Außenring mit einer Innenverzahnung, eine flexible Abtriebsbüchse mit einer Außenverzahnung, und einen im Getriebegehäuse drehbaren, an der flexiblen Abtriebsbüchse abwälzenden Wellengenerator umfasst, wobei die Außenverzahnung der flexiblen Abtriebsbüchse in Abhängigkeit einer Drehbewegung des Wellengenerators mit der Innenverzahnung des starren Außenrings in kämmenden Eingriff ist, und wobei der Rotor auf der Antriebswelle befestigt ist und ein erstes der wenigstens zwei Wälzlager innerhalb der flexiblen Abtriebsbüchse angeordnet und ausgebildet ist, die Antriebswelle in dem Getriebegehäuse drehbar zu lagern.

US2020/101595A1 bezieht sich im Allgemeinen auf magnetorheologische (MR) Flüssigkeitskupplungsvorrichtungen und insbesondere auf kabelbetriebene Systeme, die solche Vorrichtungen verwenden.

Aufgabe der Erfindung ist es, eine Antriebsvorrichtung bzw. einen Roboter mit wenigstens einer solchen Antriebsvorrichtung zu schaffen, welche Antriebsvorrichtungen in besonders verschleißarmer Ausbildung einen energiesparenden Betrieb ermöglichen.

Die Aufgabe wird gelöst durch eine Antriebsvorrichtung, aufweisend wenigstens einen Motor und wenigstens eine weitere Antriebskomponente aus der Gruppe von einem Getriebe, einem Drehmomentwandler, einer Kupplung und/oder einer Bremse, und aufweisend eine Steuervorrichtung, die ausgebildet ist zum automatischen Ansteuern des wenigstens einen Motors, wobei der wenigstens eine Motor und/oder die wenigstens eine weitere Antriebskomponente ein die Drehmomentübertragung veränderndes Steuermittel aufweist, welches wenigstens ein Leuchtmittel und einen die Drehmomentübertragung beeinflussenden Werkstoff, der wenigstens ein lichtstabilisiertes dynamisches Material (LSDM) aufweist, umfasst, wobei das Steuermittel eingerichtet ist, die Drehmomentübertragung durch Ansteuern des Leuchtmittels, welches auf das lichtstabilisierte dynamische Material (LSDM) einstrahlt, zu verändern.

Die wenigstens eine weitere Antriebskomponente kann wenigstens ein Getriebe, wenigstens ein Drehmomentwandler, wenigstens eine Kupplung und/oder wenigstens eine Bremse sein. Die erfindungsgemäße Antriebsvorrichtung kann einzeln oder in mehrfacher Ausführung an beliebigen anzutreibenden Vorrichtungen, Maschinen oder Geräten eingesetzt werden.

In einer möglichen Ausführungsform kann die Vorrichtung, an der wenigstens eine solche erfindungsgemäße Antriebsvorrichtung besonders zweckmäßig zum Einsatz kommen kann, speziell ein Roboter sein. Der Roboter kann demgemäß einen Roboterarm, eine Robotersteuerung und wenigstens eine erfindungsgemäße Antriebsvorrichtung umfassen.

Üblicherweise ist beispielsweise jedem Gelenk eines Roboterarms eine Zusammenstellung von Antriebskomponenten zugeordnet, d.h. jedes Gelenk des Roboterarms kann insofern zumindest eine Antriebskomponente der genannten Antriebskomponenten aufweisen oder mehrere verschiedene, oder gleichartige, Antriebskomponenten der genannten Antriebskomponenten aufweisen. So kann beispielsweise ein Gelenk oder können mehrere Gelenke des Roboterarms einen Motor aufweisen, der an ein Getriebe angeschlossen ist, wobei das Gelenk, das Getriebe und/oder der Motor mit einer Bremse versehen sein können. Das Getriebe beispielsweise kann gegebenenfalls auch eine Kupplung und/oder einen Drehmomentwandler aufweisen.

Das erfindungsgemäße, die Drehmomentübertragung verändernde Steuermittel kann ganz allgemein bei allen anzuwendenden Vorrichtungen wahlweise in einem der genannten Antriebskomponenten, in mehreren, insbesondere verschiedenen Antriebskomponenten der genannten Antriebskomponenten oder sogar in allen vorhandenen Antriebskomponenten Verwendung finden.

Das die Drehmomentübertragung verändernde Steuermittel kann in einer grundlegenden Ausführungsvariante ausgebildet sein, in einem ersten Schaltzustand eine Drehmomentübertragung vollständig zuzulassen und in einem zweiten Schaltzustand eine Drehmomentübertragung vollständig zu unterbinden. Ein Unterbinden der Drehmomentübertragung kann im Falle eine Kupplung oder eines Drehmomentwandlers ein vollständigen Trennen sein, so dass in einem solchen Zustand überhaupt kein Drehmoment übertragen wird. Alternativ kann ein Unterbinden der Drehmomentübertragung in einem anderen Verständnis aber beispielsweise auch ein Sperren der Drehmomentübertragung sein, beispielsweise im Falle einer Bremse, in dem ein Unterbinden der Drehmomentübertragung dadurch stattfindet, dass eine Welle, die das Drehmoment eigentlich übertragen d.h. weiterleiten soll, gesperrt d.h. festgestellt bzw. festgehalten wird, so dass die Welle sich nicht mehr drehen kann und somit kein Drehmoment mehr übertragen kann. In einem solchen Fall wird das Drehmoment beispielsweise über ein Gehäuse abgestützt.

Das die Drehmomentübertragung verändernde Steuermittel kann beispielsweise genau zwei Schaltzustände aufweisen, also die beschriebenen Zustände zum vollständigen Übertragen des Drehmoments und zum vollständigen Unterbinden der Übertragung des Drehmoments.

Alternativ kann das die Drehmomentübertragung verändernde Steuermittel auch mehr als zwei Schaltzustände aufweisen, insbesondere kann sich der das Drehmoment übertragende Zustand auch stetig oder linear ändern und demgemäß kontinuierlich veränderbar sein. In einem solchen Fall kann das Steuermittel das zu übertragende Drehmoment hinsichtlich seiner Größe ändern.

Das Leuchtmittel kann wahlweise eingeschaltet oder ausgeschaltet werden, um den Zustand der Drehmomentübertragung zu ändern bzw. wechseln. Das Leuchtmittel kann aber auch ausgebildet sein, seine Leuchtkraft bzw. seine Leuchtstärke in seiner Größe variabel zu ändern. Das Leuchtmittel kann insoweit dimmbar ausgebildet sein. Das Leuchtmittel kann dann also wahlweise heller leuchten, schwächer leuchten, oder nicht leuchten.

Um mittels des wenigstens einen Leuchtmittels die Drehmomentübertragung beeinflussen zu können, ist erfindungsgemäß ein die Drehmomentübertragung beeinflussender Werkstoff vorgesehen, der wenigstens ein lichtstabilisiertes dynamisches Material (LSDM) aufweist.

Lichtstabilisierte dynamische Materialien (LSDM) sind als solches bereits bekannt. So beschreiben beispielsweise die Autoren Hannes A. Houck, Eva Blasco, Filip E. Du Prez, und Christopher Barner-Kowollik, in einer Veröffentlichung ("Supporting Information File") mit dem Titel "Light-Stabilised Dynamic Materials" chemische Verbindungen und Zusammensetzungen, welche derartige Eigenschaften aufweisen und in der Fachwelt bereits als "lichtstabilisierte dynamische Materialien (LSDM)" bezeichnet werden.

Optisch aktivierte Polymere können beispielsweise durch UV-Licht von der flüssigen Phase in eine stabile feste Phase überführt werden. In der Forschung sind diese Vorgänge im Labor bereits reversibel. Sobald die Lichtquelle deaktiviert wird, verflüssigt sich das Material wieder. Auch umgekehrte Vorgänge sind im Labor bereits in der Entwicklung, bei der sich ein flüssiges Material unter Lichteinwirkung verfestigt.

Mit Hilfe dieser fotoaktivierbaren Werkstoffe lassen sich erfindungsgemäß in der Antriebstechnik allgemein und in der Robotik im Speziellen beispielsweise neuartige Bremsen entwickeln, die mindestens bei Halteaufgaben eine unvergleichliche Verschleißarmut aufweisen und eine neue Dimension der Verfügbarkeit und Haltbarkeit erreichen. Zudem kann mit deutlich weniger Bremsaktivierungsenergie ausgekommen werden.

Das Leuchtmittel kann vorzugsweise elektrisch angesteuert sein. Außerdem können vorzugsweise Leuchtmittel verwendet werden, die Licht aus elektrischer Energie erzeugen. Ein Ansteuern des Leuchtmittels kann also dadurch erfolgen, dass elektrische Energie dem Leuchtmittel zugeführt wird, so dass es Licht ausstrahlt oder die elektrische Energie wird abgeschaltet, so dass die Leuchtmittel ein Licht mehr ausstrahlen.

Bei den lichtstabilisierten dynamischen Materialien (LSDM) bleibt der Werkstoff demgemäß fest, solange es mit Licht angestrahlt wird. Werden die Leuchtmittel jedoch abgeschaltet, d.h. wird das lichtstabilisierte dynamische Material (LSDM) nicht mehr mit Licht angestrahlt, so verflüssigt es sich wieder. Dieser Vorgang kann im Wechsel zwischen Verfestigung und Verflüssigung unbegrenzt oft durchgeführt werden.

Erfindungsgemäß ist ganz allgemein ein Gehäuse erforderlich, in dem das lichtstabilisierte dynamische Material (LSDM) vorhanden ist. In einen solchen Raum oder Kammer, die mit dem lichtstabilisierte dynamische Material (LSDM) gefüllt ist, ragt wenigstens eine Welle oder mehrere Wellen, die zur Übertragung des Drehmoment vorgesehen sind. Die wenigstens eine Welle trägt oder die mehreren Wellen tragen, und ggf. das Gehäuse bzw. der Raum oder die Kammer, Übertragungsstrukturen, welche in das lichtstabilisierte dynamische Material (LSDM) eintauchen. Ist das lichtstabilisierte dynamische Material (LSDM) aufgrund fehlender Lichteinstrahlung in seinem flüssigen Zustand, können sich die Übertragungsstrukturen in der Flüssigkeit bewegen und eine Übertragung eines eingeleiteten Drehmoments ist nicht mehr oder nur in eingeschränktem Umfang möglich. Ist das lichtstabilisierte dynamische Material (LSDM) aufgrund einer erfolgenden Lichteinstrahlung in seinem festen Zustand, können sich die Übertragungsstrukturen darin nicht mehr bewegen und sind insoweit formschlüssig mit dem verfestigten d.h. nun starren lichtstabilisierte dynamische Material (LSDM) verbunden. Eine Übertragung eines eingeleiteten Drehmoments ist in diesem Zustand somit uneingeschränkt möglich. Insbesondere in den Ausführungen als Kupplung oder ein Drehmomentwandler können Übergangszustände des lichtstabilisierten dynamischen Materials (LSDM) zwischen fest und flüssig genutzt werden, um ein Drehmoment in kontrollierter Höhe übertragen zu können, und/oder das Drehmoment kontrolliert ansteigen oder abfallen lassen zu können.

Das Steuermittel, welches die Drehmomentübertragung verändert, kann wenigstens einer Bremse zugeordnet sein, wobei die Bremse ein an den zugeordneten Motor drehmomentgekoppeltes, in einem Bremsengehäuse der Bremse drehbar gelagertes Bremsglied aufweist, welches erste Bremsübertragungsstrukturen aufweist, und das Bremsengehäuse zweite Bremsübertragungsstrukturen aufweist, wobei die ersten Bremsübertragungsstrukturen mit den zweiten Bremsübertragungsstrukturen über den Werkstoff, der das wenigstens eine lichtstabilisierte dynamische Material (LSDM) aufweist, in Kontakt sind, um in Abhängigkeit des von den Leuchtmitteln in das lichtstabilisierte dynamische Material (LSDM) eingestrahlten Lichtes die Drehmomentübertragung zwischen den ersten Bremsübertragungsstrukturen und den zweiten Bremsübertragungsstrukturen zu steuern.

Das drehbar gelagerte Bremsglied kann beispielsweise Teil einer Welle sein, die kontrolliert gebremst werden soll. Die Welle kann beispielsweise mit einer Motorwelle eines Motors, insbesondere eines Motors eines Roboterarms gekoppelt sein oder die Welle kann direkt die Motorwelle sein. Das drehbar gelagerte Bremsglied kann insoweit analog einer Bremsscheibe ausgebildet sein und die ersten Bremsübertragungsstrukturen aufweisen.

Die ersten Bremsübertragungsstrukturen sollen derart ausgebildet und angeordnet sein, dass in einem flüssigen Zustand des lichtstabilisierten dynamischen Materials (LSDM) die ersten Bremsübertragungsstrukturen ein zumindest weitgehendes oder sogar vollständiges freies Drehen des Bremsglieds zulassen und in einem festen Zustand des lichtstabilisierten dynamischen Materials (LSDM) die ersten Bremsübertragungsstrukturen sich zumindest weitgehend oder vollständig formschlüssig mit dem festen lichtstabilisierten dynamischen Material (LSDM) verbinden. Die ersten Bremsübertragungsstrukturen können insofern beispielsweise von stegartigen, rippenartigen, wellenartigen und/oder schaufelartigen Vorsprüngen gebildet werden.

Die zweiten Bremsübertragungsstrukturen können in den Innenwänden des Bremsengehäuses angeordnet sein. Sie erstrecken sich insoweit analog den ersten Bremsübertragungsstrukturen in das lichtstabilisierte dynamische Material (LSDM). Die zweiten Bremsübertragungsstrukturen sollen ebenfalls derart ausgebildet und angeordnet sein, dass in einem flüssigen Zustand des lichtstabilisierten dynamischen Materials (LSDM) die zweiten Bremsübertragungsstrukturen ein zumindest weitgehendes oder sogar vollständiges freies Drehen des Bremsglieds zulassen und in einem festen Zustand des lichtstabilisierten dynamischen Materials (LSDM) die zweiten Bremsübertragungsstrukturen sich zumindest weitgehend oder vollständig formschlüssig mit dem festen lichtstabilisierten dynamischen Material (LSDM) verbinden. Die zweiten Bremsübertragungsstrukturen können insofern beispielsweise von stegartigen, rippenartigen, wellenartigen und/oder schaufelartigen Vorsprüngen gebildet werden.

Das Steuermittel, welches die Drehmomentübertragung verändert, kann wenigstens einer Kupplung der Antriebsvorrichtung, insbesondere einer Kupplung eines Roboters zugeordnet sein, wobei die Kupplung ein an den zugeordneten Motor drehmomentgekoppeltes, in einem Kupplungsgehäuse der Kupplung drehbar gelagertes erstes Kupplungsglied aufweist, welches erste Kupplungsübertragungsstrukturen aufweist, und ein in dem Kupplungsgehäuse der Kupplung drehbar gelagertes zweites Kupplungsglied aufweist, welches zweite Kupplungsübertragungsstrukturen aufweist, wobei die ersten Kupplungsübertragungsstrukturen mit den zweiten Kupplungsübertragungsstrukturen über den Werkstoff, der das wenigstens eine lichtstabilisierte dynamische Material (LSDM) aufweist, in Kontakt sind, um in Abhängigkeit des von den Leuchtmitteln in das lichtstabilisierte dynamische Material (LSDM) eingestrahlten Lichtes die Drehmomentübertragung zwischen den ersten Kupplungsübertragungsstrukturen und den zweiten Kupplungsübertragungsstrukturen zu steuern.

Die ersten und zweiten Kupplungsübertragungsstrukturen sollen derart ausgebildet und angeordnet sein, dass in einem flüssigen Zustand des lichtstabilisierten dynamischen Materials (LSDM) die ersten und zweiten Kupplungsübertragungsstrukturen ein zumindest weitgehendes oder sogar vollständiges freies Drehen des ersten und zweiten Kupplungsglieds zulassen und in einem festen Zustand des lichtstabilisierten dynamischen Materials (LSDM) die ersten und zweiten Kupplungsübertragungsstrukturen sich zumindest weitgehend oder vollständig formschlüssig mit dem festen lichtstabilisierten dynamischen Material (LSDM) verbinden. Die ersten und zweiten Kupplungsübertragungsstrukturen können insofern beispielsweise von stegartigen, rippenartigen, wellenartigen und/oder schaufelartigen Vorsprüngen gebildet werden.

Das Steuermittel, welches die Drehmomentübertragung verändert, kann wenigstens einem Drehmomentwandler der Antriebsvorrichtung, insbesondere einen Drehmomentwandler eines Roboters zugeordnet sein, wobei der Drehmomentwandler ein an den zugeordneten Motor drehmomentgekoppeltes, in einem Wandlergehäuse des Drehmomentwandlers drehbar gelagertes erstes Wandlerglied aufweist, welches erste Wandlerübertragungsstrukturen aufweist, und ein in dem Wandlergehäuse des Drehmomentwandlers drehbar gelagertes zweites Wandlerglied aufweist, welches zweite Wandlerübertragungsstrukturen aufweist, und das Wandlergehäuse dritte Wandlerübertragungsstrukturen aufweist, wobei die ersten Wandlerübertragungsstrukturen mit den zweiten Wandlerübertragungsstrukturen und dritten Wandlerübertragungsstrukturen über den Werkstoff, der das wenigstens eine lichtstabilisierte dynamische Material (LSDM) aufweist, in Kontakt sind, um in Abhängigkeit des von den Leuchtmitteln in das lichtstabilisierte dynamische Material (LSDM) eingestrahlten Lichtes die Drehmomentübertragung zwischen den ersten Wandlerübertragungsstrukturen und den zweiten Wandlerübertragungsstrukturen zu steuern.

Die ersten, zweiten und dritten Wandlerübertragungsstrukturen sollen derart ausgebildet und angeordnet sein, dass in einem flüssigen Zustand des lichtstabilisierten dynamischen Materials (LSDM) die ersten, zweiten und dritten Wandlerübertragungsstrukturen ein zumindest weitgehendes oder sogar vollständiges freies Drehen des ersten und zweiten Wandlerglieds zulassen und in einem festen Zustand des lichtstabilisierten dynamischen Materials (LSDM) die ersten, zweiten und dritten Wandlerübertragungsstrukturen sich zumindest weitgehend oder vollständig formschlüssig mit dem festen lichtstabilisierten dynamischen Material (LSDM) verbinden. Die ersten, zweiten und dritten Wandlerübertragungsstrukturen können insofern beispielsweise von stegartigen, rippenartigen, wellenartigen und/oder schaufelartigen Vorsprüngen gebildet werden.

Das Steuermittel, welches die Drehmomentübertragung verändert, kann wenigstens einem Getriebe der Antriebsvorrichtung, insbesondere einem Getriebe eines Roboters zugeordnet sein, wobei das Getriebe ein an den zugeordneten Motor drehmomentgekoppeltes, in einem Getriebegehäuse des Getriebes drehbar gelagertes Getriebeglied aufweist, welches erste Getriebeübertragungsstrukturen aufweist, und im Getriebegehäuse wenigstens eine Übersetzungsstufe angeordnet ist, die zweite Getriebeübertragungsstrukturen aufweist, wobei die ersten Getriebeübertragungsstrukturen mit den zweiten Getriebeübertragungsstrukturen über den Werkstoff, der das wenigstens eine lichtstabilisierte dynamische Material (LSDM) aufweist, in Kontakt sind, um in Abhängigkeit des von den Leuchtmitteln in das lichtstabilisierte dynamische Material (LSDM) eingestrahlten Lichtes die Drehmomentübertragung zwischen den ersten Getriebeübertragungsstrukturen und den zweiten Getriebeübertragungsstrukturen zu steuern.

Die ersten und zweiten Getriebeübertragungsstrukturen sollen derart ausgebildet und angeordnet sein, dass in einem flüssigen Zustand des lichtstabilisierten dynamischen Materials (LSDM) die ersten und zweiten Getriebeübertragungsstrukturen ein zumindest weitgehendes oder sogar vollständiges freies Drehen des jeweiligen Getriebeglieds zulassen und in einem festen Zustand des lichtstabilisierten dynamischen Materials (LSDM) die ersten und zweiten Getriebeübertragungsstrukturen sich zumindest weitgehend oder vollständig formschlüssig mit dem festen lichtstabilisierten dynamischen Material (LSDM) verbinden. Die ersten und zweiten Getriebeübertragungsstrukturen können insofern beispielsweise von stegartigen, rippenartigen, wellenartigen und/oder schaufelartigen Vorsprüngen gebildet werden.

Das Steuermittel, welches die Drehmomentübertragung verändert, kann dem wenigstens einen Motor zugeordnet sein, wobei der wenigstens eine Motor ein an die zugeordnete Motorwelle drehmomentgekoppeltes, in einem Motorgehäuse des Motors drehbares Drehmomentglied aufweist, welches erste Motormomentübertragungsstrukturen aufweist, und die Motorwelle zweite Motormomentübertragungsstrukturen aufweist, wobei die ersten Motormomentübertragungsstrukturen mit den zweiten Motormomentübertragungsstrukturen über den Werkstoff, der das wenigstens eine lichtstabilisierte dynamische Material (LSDM) aufweist, in Kontakt sind, um in Abhängigkeit des von den Leuchtmitteln in das lichtstabilisierte dynamische Material (LSDM) eingestrahlten Lichtes die Drehmomentübertragung zwischen den ersten Motormomentübertragungsstrukturen und den zweiten Motormomentübertragungsstrukturen zu steuern.

Die ersten und zweiten Motormomentübertragungsstrukturen sollen derart ausgebildet und angeordnet sein, dass in einem flüssigen Zustand des lichtstabilisierten dynamischen Materials (LSDM) die ersten und zweiten Motormomentübertragungsstrukturen ein zumindest weitgehendes oder sogar vollständiges freies Drehen des jeweiligen Drehmomentglieds zulassen und in einem festen Zustand des lichtstabilisierten dynamischen Materials (LSDM) die ersten und zweiten Motormomentübertragungsstrukturen sich zumindest weitgehend oder vollständig formschlüssig mit dem festen lichtstabilisierten dynamischen Material (LSDM) verbinden. Die ersten und zweiten Motormomentübertragungsstrukturen können insofern beispielsweise von stegartigen, rippenartigen, wellenartigen und/oder schaufelartigen Vorsprüngen gebildet werden.

In allen Ausführungsformen der Antriebskomponenten kann jeweils das wenigstens eine Leuchtmittel eine innerhalb des Bremsengehäuses, innerhalb des Kupplungsgehäuses, innerhalb des Wandlergehäuses, innerhalb des Getriebegehäuses und/oder innerhalb des Motorgehäuses angeordnete LED sein, die elektrisch von außen angesteuert wird.

Die Leuchtmittel, insbesondere die LEDs können in Gruppen, wie Zeilen, Reihen oder Haufen angeordnet sein und insbesondere hinsichtlich Ihrer Anzahl, Positionen und Anordnungen auf die jeweiligen Übertragungsstrukturen, d.h. an die ersten und zweiten Bremsübertragungsstrukturen, die ersten und zweiten Kupplungsübertragungsstrukturen, die ersten, zweiten und dritten Wandlerübertragungsstrukturen, die ersten und zweiten Getriebeübertragungsstrukturen und/oder die ersten und zweiten Motormomentübertragungsstrukturen angepasst sein.

In allen Ausführungsformen der Antriebskomponenten kann jeweils das wenigstens eine Leuchtmittel eine außerhalb eines lichtdurchlässigen Bremsengehäuses, außerhalb eines lichtdurchlässigen Kupplungsgehäuses, außerhalb eines lichtdurchlässigen Wandlergehäuses, außerhalb eines lichtdurchlässigen Getriebegehäuses und/oder außerhalb eines lichtdurchlässigen Motorgehäuses angeordnete LED sein, wobei das von der wenigstens einen LED ausgesandte Licht in das lichtstabilisierte dynamische Material (LSDM) von außen einstrahlt.

Auch im Falle von außenliegenden Leuchtmitteln, insbesondere die LEDs können diese in Gruppen, wie Zeilen, Reihen oder Haufen angeordnet sein und insbesondere hinsichtlich Ihrer Anzahl, Positionen und Anordnungen auf die jeweiligen Übertragungsstrukturen, d.h. an die ersten und zweiten Bremsübertragungsstrukturen, die ersten und zweiten Kupplungsübertragungsstrukturen, die ersten, zweiten und dritten Wandlerübertragungsstrukturen, die ersten und zweiten Getriebeübertragungsstrukturen und/oder die ersten und zweiten Motormomentübertragungsstrukturen angepasst sein.

Wenn die Leuchtmittel, insbesondere die LEDs außerhalb des lichtstabilisierten dynamischen Materials (LSDM) angeordnet sind, entfällt es, elektrische Leitungen an das lichtstabilisierte dynamische Material (LSDM) heranführen zu müssen. Es können auch andernfalls notwendige Durchlässe von außen nach innen für die elektrische Leitungen entfallen.

In allen Ausführungsformen der Antriebskomponenten können jeweils die ersten und zweiten Bremsübertragungsstrukturen, die ersten und zweiten Kupplungsübertragungsstrukturen, die ersten, zweiten und dritten Wandlerübertragungsstrukturen, die ersten und zweiten Getriebeübertragungsstrukturen und/oder die ersten und zweiten Motormomentübertragungsstrukturen Vorsprünge, insbesondere schaufelförmige oder wellenförmige Vorsprünge aufweisen, welche in das lichtstabilisierte dynamische Material (LSDM) hineinragen.

Derartige Vorsprünge können ausgebildet sein, eine formschlüssige Verbindung mit dem lichtstabilisierten dynamischen Material (LSDM) in seinem festen Zustand zu verbessern. Derartige Vorsprünge können alternativ oder ergänzend ausgebildet sein, ein freies Bewegen der jeweiligen Übertragungsstrukturen in dem lichtstabilisierten dynamischen Material (LSDM) in seinem flüssigen Zustand möglichst wenig zu behindern.

In allen Ausführungsformen der Antriebskomponenten kann jeweils das Bremsengehäuse, das Kupplungsgehäuse, das Wandlergehäuse, das Getriebegehäuse, das Motorgehäuse und/oder eine sonstige Kammer, in welcher das lichtstabilisierte dynamische Material (LSDM) eingeschlossen ist, mit Kühlrippen versehene sein, die sich nach außen hin erstrecken, oder in einer Kammerwand der Kammer oder in einer Gehäusewand des jeweiligen Gehäuses Kühlkanäle ausgebildet sein, in denen eine Kühlflüssigkeit zirkuliert.

Die Kühlrippen und/oder die Kühlkanäle mit der Kühlflüssigkeit können ausgebildet sein, eine eventuell unerwünschte Wärmeenergiemenge aus dem lichtstabilisierten dynamischen Material (LSDM) nach außen abzuführen.

Die Aufgabe wird auch gelöst durch einen Roboter, aufweisend einen Roboterarm mit mehreren Gelenken und mehreren Gliedern, die durch die Bewegungen der Gelenke des Roboterarms gegeneinander verstellbar sind, wobei jedem angetriebenen Gelenk eine Antriebsvorrichtung nach einer Ausführung oder nach mehreren Ausführungen, wie erfindungsgemäß beschrieben, zugeordnet ist und diese jeweilige Antriebsvorrichtung ausgebildet ist, das ihr zugeordnete Gelenk des Roboterarms zu verstellen und zwar durch jeweiliges automatisches Ansteuern des Motors der jeweiligen Antriebsvorrichtung, wobei die Steuervorrichtungen eine Robotersteuerung umfassen, die ausgebildet ist zum automatischen Ansteuern der Motoren, um die Glieder des Roboterarms durch angetriebenes Bewegen der Gelenke automatisch und individuell gegeneinander zu verstellen.

Demgemäß kann die Aufgabe gelöst werden durch einen Roboter, aufweisend einen Roboterarm mit mehreren Gelenken und mehreren Gliedern, die durch die Bewegungen der Gelenke des Roboterarms gegeneinander verstellbar sind, wobei jedem angetriebenen Gelenk ein Motor und wenigstens eine weitere Antriebskomponente aus der Gruppe von einem Getriebe, einem Drehmomentwandler, einer Kupplung und/oder einer Bremse zugeordnet ist, wobei der jeweilige Motor ausgebildet ist, das ihm zugeordnete Gelenk zu verstellen und zwar durch automatisches Ansteuern des Motors, und aufweisend eine Robotersteuerung, die ausgebildet ist zum automatischen Ansteuern der Motoren, um die Glieder des Roboterarms durch angetriebenes Bewegen der Gelenke automatisch und individuell gegeneinander zu verstellen, wobei der Motor und/oder die wenigstens eine weitere Antriebskomponente ein die Drehmomentübertragung veränderndes Steuermittel aufweist, welches wenigstens ein Leuchtmittel wie beschrieben und einen die Drehmomentübertragung beeinflussenden Werkstoff wie beschrieben, der wenigstens ein lichtstabilisiertes dynamisches Material (LSDM) aufweist, umfasst, wobei das Steuermittel eingerichtet ist, die Drehmomentübertragung durch Ansteuern des Leuchtmittels, welches auf das lichtstabilisierte dynamische Material (LSDM) einstrahlt, zu verändern.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen. Die Erfindung ist im Folgenden anhand des konkreten Ausführungsbeispiels eines Roboters beschrieben. Wie im allgemeinen Beschreibungsteil erläutert, kann eine einzelne Antriebsvorrichtung oder es können mehrere Antriebsvorrichtungen auch an anderen Vorrichtungen, Maschinen und Geräten vorgesehen sein, die keine Roboter sind. Insofern sind im Sinne der Erfindung die in der folgenden Figurenbeschreibung erläuterten Merkmale, die nicht unmittelbar und ausschließlich als Robotermerkmale zu verstehen sind, als allgemeine Merkmale der Antriebsvorrichtung zu verstehen, die auch in Verbindung mit anderen Vorrichtungen, Maschinen und Geräten eingesetzt werden können.

Es zeigen:
- Fig. 1: eine schematische Darstellung eines beispielhaften Roboters mit einem Roboterarm und einer Robotersteuerung, sowie zugeordneten Antriebskomponenten,
- Fig. 2: eine schematische Darstellung einer beispielhaften erfindungsgemäßen Antriebskomponente in der Ausführungsform einer Bremse, die ein lichtstabilisiertes dynamisches Material aufweist,
- Fig. 3: eine schematische Darstellung einer beispielhaften erfindungsgemäßen Antriebskomponente in der Ausführungsform einer Kupplung, die ein lichtstabilisiertes dynamisches Material aufweist,
- Fig. 4: eine schematische Darstellung einer beispielhaften erfindungsgemäßen Antriebskomponente in der Ausführungsform eines Drehmomentwandlers, der ein lichtstabilisiertes dynamisches Material aufweist,
- Fig. 5: eine schematische Darstellung einer beispielhaften erfindungsgemäßen Antriebskomponente in der Ausführungsform eines Getriebes, das ein lichtstabilisiertes dynamisches Material aufweist, und
- Fig. 6: eine schematische Darstellung einer beispielhaften erfindungsgemäßen Antriebskomponente in der Ausführungsform eines Motors, der ein lichtstabilisiertes dynamisches Material aufweist.

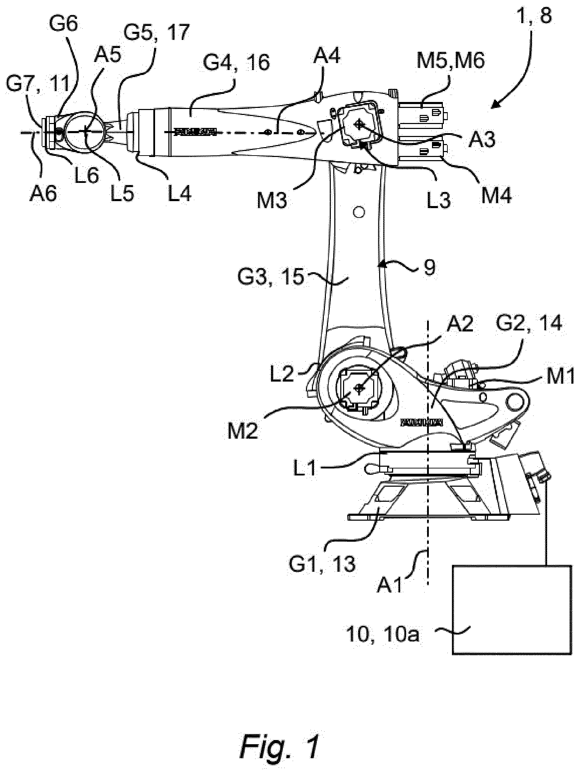

Die Fig. 1 zeigt einen Roboter 8, der einen Roboterarm 9 und eine als Robotersteuerung 10 ausgebildete Steuervorrichtung 10a aufweist. Der Roboterarm 9 umfasst im Falle des vorliegenden Ausführungsbeispiels mehrere, nacheinander angeordnete, und mittels Gelenke L1 bis L6 drehbar miteinander verbundene Glieder G1 bis G7. Der Roboter 8 umfasst im Falle des dargestellten Ausführungsbeispiels je Gelenk L1 bis L6 jeweils eine zugeordnete Antriebsvorrichtung 1.

Der Roboter 8 weist die Robotersteuerung 10 auf, die ausgebildet ist, ein Roboterprogramm auszuführen und die Glieder G1-G7 und Gelenke L1-L6 des Roboterarms 9 automatisch zu bewegen. Eines der mehreren Glieder G1-G7 bildet ein Endglied (G7) des Roboterarms 9, das einen Werkzeugflansch 11 aufweist.

Die Robotersteuerung 10 des Roboters 8 ist ausgebildet bzw. eingerichtet, ein Roboterprogramm auszuführen, durch welches die Gelenke L1 bis L6 des Roboterarms 9 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben, den Motoren M1 bis M6 verbunden, die ausgebildet sind, die jeweiligen Gelenke L1 bis L6 des Roboterarms 9 zu verstellen.

Bei den Gliedern G1 bis G7 handelt es sich im Falle des vorliegenden Ausführungsbeispiels um ein Robotergrundgestell 13 und ein relativ zum Robotergrundgestell 13 um eine vertikal verlaufende Achse A1 drehbar gelagertes Karussell 14. Weitere Glieder des Roboterarms 9 sind eine Schwinge 15, ein Armausleger 16 und eine vorzugsweise mehrachsige Roboterhand 17 mit einer als Werkzeugflansch 11 ausgeführten Befestigungsvorrichtung zum Befestigen eines Werkzeugs. Die Schwinge 15 ist am unteren Ende, d.h. an dem Gelenk L2 der Schwinge 15, das auch als Schwingenlagerkopf bezeichnet werden kann, auf dem Karussell 14 um eine vorzugsweise horizontale Drehachse A2 schwenkbar gelagert.

Am oberen Ende der Schwinge 15 ist an dem einen Gelenk L3 der Schwinge 15 wiederum um eine ebenfalls vorzugsweise horizontale Achse A3 der Armausleger 16 schwenkbar gelagert. Dieser trägt endseitig die Roboterhand 17 mit ihren vorzugsweise drei Drehachsen A4, A5, A6. Die Gelenke L1 bis L6 sind durch jeweils einen der elektrischen Motoren M1 bis M6 über die Robotersteuerung 10 programmgesteuert antreibbar und sind mittels den Gelenken L1 bis L6 bzw. den Motoren M1 bis M6 zugeordneten Bremsen abbremsbar und arretiert festhaltbar.

Bei dem Roboterarm 9 ist jedem angetriebenen Gelenk L1-L6 ein Motor M1-M6 und wenigstens eine weitere Antriebskomponente 20 aus der Gruppe von einem Getriebe 25, einem Drehmomentwandler 24, einer Kupplung 23 und/oder einer Bremse 22 zugeordnet ist, wobei der Motor M1-M6 und/oder die wenigstens eine weitere Antriebskomponente 20 ein die Drehmomentübertragung veränderndes Steuermittel 21 aufweist, welches wenigstens ein Leuchtmittel 21.1 und einen die Drehmomentübertragung beeinflussenden Werkstoff 21.2, der wenigstens ein lichtstabilisiertes dynamisches Material LSDM aufweist, umfasst, und wobei das Steuermittel 21 eingerichtet ist, die Drehmomentübertragung durch Ansteuern des Leuchtmittels 21.1, welches auf das lichtstabilisierte dynamische Material LSDM einstrahlt, zu verändern.

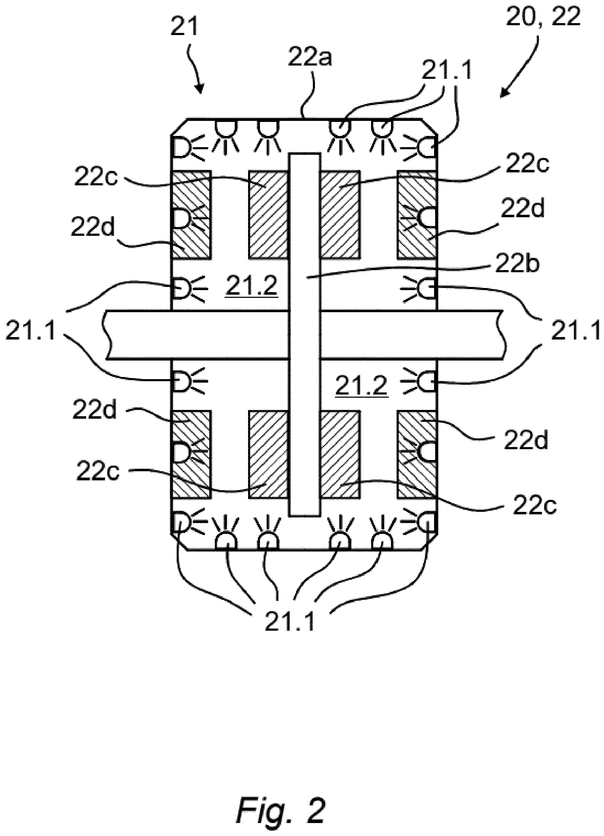

In der Fig. 2 ist eine beispielhafte erfindungsgemäße Antriebskomponente 20 in der ersten Ausführungsform einer Bremse 22 dargestellt, wobei das die Drehmomentübertragung verändernde Steuermittel 21 wenigstens einer der Bremsen 22 des Roboterarms 9 zugeordnet ist, wobei die jeweilige Bremse 22 ein an den zugeordneten Motor M1-M6 drehmomentgekoppeltes, in einem Bremsengehäuse 22a der Bremse 22 drehbar gelagertes Bremsglied 22b aufweist, welches erste Bremsübertragungsstrukturen 22c aufweist, und das Bremsengehäuse 22a zweite Bremsübertragungsstrukturen 22d aufweist, wobei die ersten Bremsübertragungsstrukturen 22c mit den zweiten Bremsübertragungsstrukturen 22d über den Werkstoff 21.2, der das wenigstens eine lichtstabilisierte dynamische Material LSDM aufweist, in Kontakt sind, um in Abhängigkeit des von den Leuchtmitteln 21.1 in das lichtstabilisierte dynamische Material LSDM eingestrahlten Lichtes die Drehmomentübertragung zwischen den ersten Bremsübertragungsstrukturen 22c und den zweiten Bremsübertragungsstrukturen 22d zu steuern.

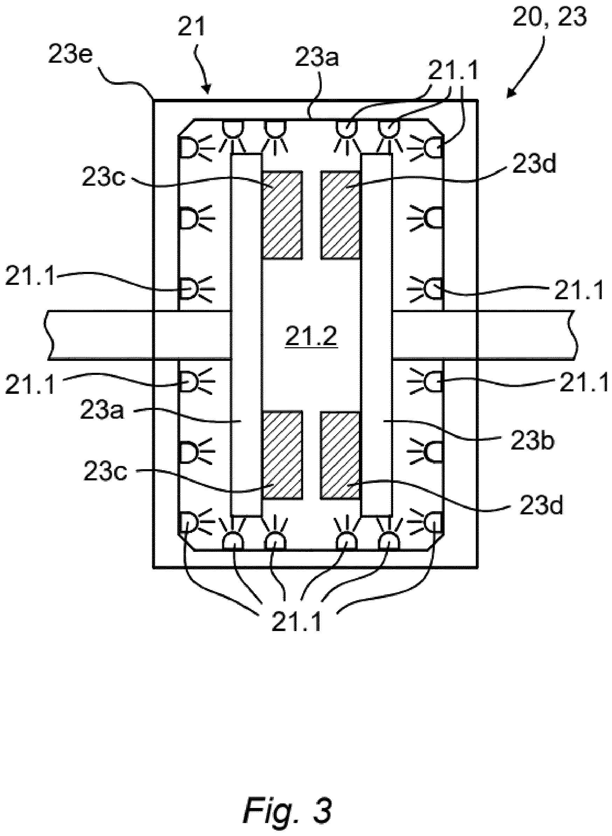

In der Fig. 3 ist eine beispielhafte erfindungsgemäße Antriebskomponente 20 in der zweiten Ausführungsform einer Kupplung 23 dargestellt, wobei das die Drehmomentübertragung verändernde Steuermittel 21 wenigstens einer Kupplung 23 des Roboters 8 zugeordnet ist, wobei die Kupplung 23 ein an den zugeordneten Motor M1-M6 drehmomentgekoppeltes, in einem Kupplungsgehäuse 23e der Kupplung 23 drehbar gelagertes erstes Kupplungsglied 23a aufweist, welches erste Kupplungsübertragungsstrukturen 23c aufweist, und ein in dem Kupplungsgehäuse 23e der Kupplung 23 drehbar gelagertes zweites Kupplungsglied 23b aufweist, welches zweite Kupplungsübertragungsstrukturen 23d aufweist, wobei die ersten Kupplungsübertragungsstrukturen 23c mit den zweiten Kupplungsübertragungsstrukturen 23d über den Werkstoff 21.2, der das wenigstens eine lichtstabilisierte dynamische Material LSDM aufweist, in Kontakt sind, um in Abhängigkeit des von den Leuchtmitteln 21.1 in das lichtstabilisierte dynamische Material LSDM eingestrahlten Lichtes die Drehmomentübertragung zwischen den ersten Kupplungsübertragungsstrukturen 23c und den zweiten Kupplungsübertragungsstrukturen 23d zu steuern.

Im Falle der ersten und zweiten Ausführungsform, wie in Fig. 2 und Fig. 3 dargestellt ist, sind die Leuchtmittel 21.1 innerhalb des Bremsengehäuses 22a (Fig. 2) bzw. innerhalb des Kupplungsgehäuses 23e (Fig. 3) angeordnet und werden elektrisch von außerhalb des Bremsengehäuses 22a (Fig. 2) bzw. des Kupplungsgehäuses 23e (Fig. 3) angesteuert.

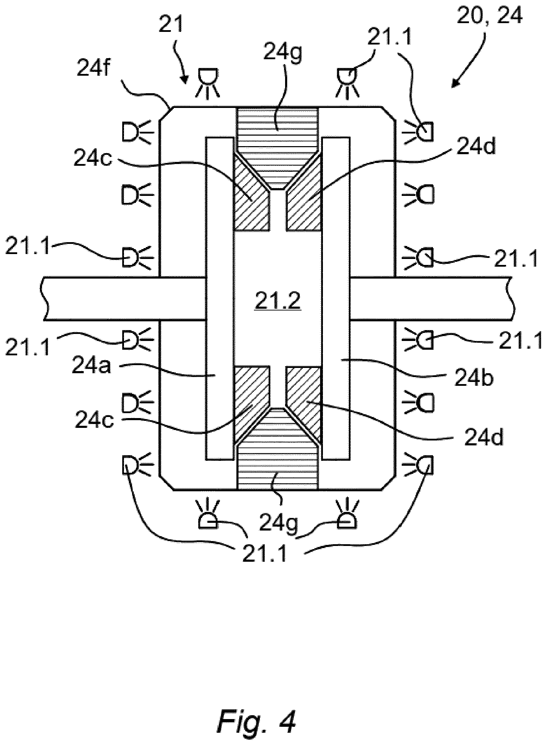

Aber auch in den Fällen der dritten bis fünften Ausführungsform, wie in Fig. 4 bis Fig. 6 dargestellt ist, können die Leuchtmittel 21.1 beispielsweise auch innerhalb des Wandlergehäuses 24g, innerhalb des Getriebegehäuses 25e und/oder innerhalb des Motorgehäuses 26e angeordnet sein und demgemäß elektrisch von außen angesteuert werden.

In der Fig. 4 ist eine beispielhafte erfindungsgemäße Antriebskomponente 20 in der dritten Ausführungsform eines Drehmomentwandlers 24 dargestellt, wobei das die Drehmomentübertragung verändernde Steuermittel 21 wenigstens einem Drehmomentwandler 24 des Roboters 8 zugeordnet ist, und wobei der Drehmomentwandler 24 ein an den zugeordneten Motor M1-M6 drehmomentgekoppeltes, in einem Wandlergehäuse 24f des Drehmomentwandlers 24 drehbar gelagertes erstes Wandlerglied 24a aufweist, welches erste Wandlerübertragungsstrukturen 24c aufweist, und ein in dem Wandlergehäuse 24f des Drehmomentwandlers 24 drehbar gelagertes zweites Wandlerglied 24b aufweist, welches zweite Wandlerübertragungsstrukturen 24d aufweist, und das Wandlergehäuse 24f dritte Wandlerübertragungsstrukturen 24g aufweist, wobei die ersten Wandlerübertragungsstrukturen 24c mit den zweiten Wandlerübertragungsstrukturen 24d und dritten Wandlerübertragungsstrukturen 24g über den Werkstoff 21.2, der das wenigstens eine lichtstabilisierte dynamische Material LSDM aufweist, in Kontakt sind, um in Abhängigkeit des von den Leuchtmitteln 21.1 in das lichtstabilisierte dynamische Material LSDM eingestrahlten Lichtes die Drehmomentübertragung zwischen den ersten Wandlerübertragungsstrukturen 24c und den zweiten Wandlerübertragungsstrukturen 24d zu steuern.

In der dritten Ausführungsform gemäß Fig. 4 sind in einer Abwandlung die Leuchtmittel 21.1 außerhalb eines lichtdurchlässigen Wandlergehäuses 24f angeordnet und das von den Leuchtmitteln 21.1 ausgesandte Licht wird in das lichtstabilisierte dynamische Material LSDM von außen in das lichtdurchlässigen Wandlergehäuses 24f eingestrahlt.

Im selben Sinne können in den anderen Ausführungsformen gemäß Fig. 2, Fig. 3, sowie Fig. 5 und Fig. 6 die Leuchtmittel 21.1 auch außerhalb eines lichtdurchlässigen Bremsengehäuses 22a, außerhalb eines lichtdurchlässigen Kupplungsgehäuses 23e, außerhalb eines lichtdurchlässigen Getriebegehäuses 25e und/oder außerhalb eines lichtdurchlässigen Motorgehäuses 26e angeordnet sein, wobei das von den Leuchtmitteln 21.1 ausgesandte Licht in das lichtstabilisierte dynamische Material LSDM von außen einstrahlt.

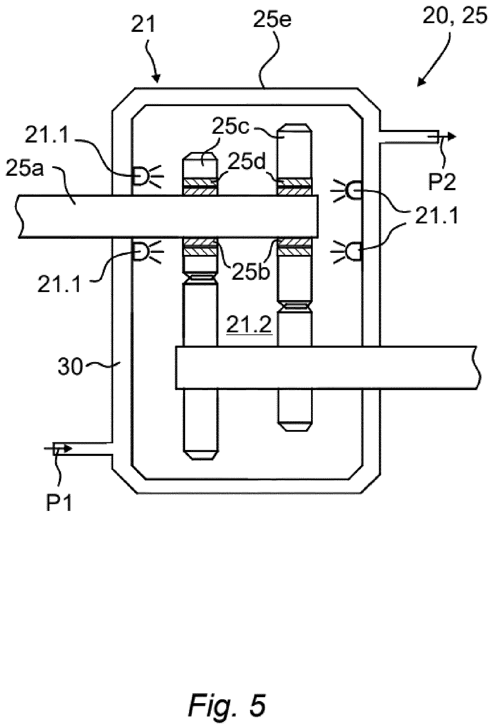

In der Fig. 5 ist eine beispielhafte erfindungsgemäße Antriebskomponente 20 in der vierten Ausführungsform eines Getriebes 25 dargestellt, wobei das die Drehmomentübertragung verändernde Steuermittel 21 wenigstens einem Getriebe 25 des Roboters 8 zugeordnet ist, und wobei das Getriebe 25 ein an den zugeordneten Motor M1-M6 drehmomentgekoppeltes, in einem Getriebegehäuse 25e des Getriebes 25 drehbar gelagertes Getriebeglied 25a aufweist, welches erste Getriebeübertragungsstrukturen 25b aufweist, und im Getriebegehäuse 25e wenigstens eine Übersetzungsstufe 25c angeordnet ist, die zweite Getriebeübertragungsstrukturen 25d aufweist, wobei die ersten Getriebeübertragungsstrukturen 25b mit den zweiten Getriebeübertragungsstrukturen 25d über den Werkstoff 21.2, der das wenigstens eine lichtstabilisierte dynamische Material LSDM aufweist, in Kontakt sind, um in Abhängigkeit des von den Leuchtmitteln 21.1 in das lichtstabilisierte dynamische Material LSDM eingestrahlten Lichtes die Drehmomentübertragung zwischen den ersten Getriebeübertragungsstrukturen 25b und den zweiten Getriebeübertragungsstrukturen 25d zu steuern.

In der vierten Ausführungsform gemäß Fig. 5 ist beispielhaft das Getriebegehäuse 25e, in welcher das lichtstabilisierte dynamische Material LSDM eingeschlossen ist, mit einer Gehäusewand versehen, in der Kühlkanäle 30 ausgebildet sind, in denen eine Kühlflüssigkeit zirkuliert (Pfeile P1, P2).

Auch in den anderen Ausführungsformen können, in Abwandlung zu den Darstellungen, das Bremsengehäuse 22a, das Kupplungsgehäuse 23e, das Wandlergehäuse 24f, das Motorgehäuse 26e und/oder eine sonstige Kammer, in welcher das lichtstabilisierte dynamische Material (LSDM) eingeschlossen ist, in einer Kammerwand der Kammer oder in einer Gehäusewand des jeweiligen Gehäuses Kühlkanäle 30 ausgebildet sein, in denen eine Kühlflüssigkeit zirkuliert.

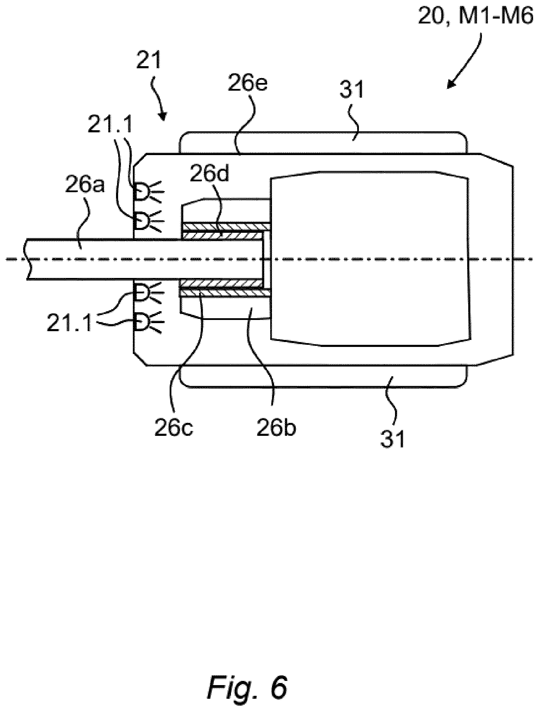

In der Fig. 6 ist eine beispielhafte erfindungsgemäße Antriebskomponente 20 in der fünften Ausführungsform eines Motors M1-M6 dargestellt, wobei das die Drehmomentübertragung verändernde Steuermittel 21 wenigstens einem der Motoren M1-M6 zugeordnet ist, wobei der Motor M1-M6 ein an die zugeordnete Motorwelle 26a drehmomentgekoppeltes, in einem Motorgehäuse 26e des Motors M1-M6 drehbares Drehmomentglied 26b aufweist, welches erste Motormomentübertragungsstrukturen 26c aufweist, und die Motorwelle 26a zweite Motormomentübertragungsstrukturen 26d aufweist, wobei die ersten Motormomentübertragungsstrukturen 26c mit den zweiten Motormomentübertragungsstrukturen 26d über den Werkstoff 21.2, der das wenigstens eine lichtstabilisierte dynamische Material LSDM aufweist, in Kontakt sind, um in Abhängigkeit des von den Leuchtmitteln 21.1 in das lichtstabilisierte dynamische Material LSDM eingestrahlten Lichtes die Drehmomentübertragung zwischen den ersten Motormomentübertragungsstrukturen 26c und den zweiten Motormomentübertragungsstrukturen 26d zu steuern.

In der fünften Ausführungsform gemäß Fig. 6 ist beispielhaft das Motorgehäuse 26e mit Kühlrippen 31 versehene, die sich nach außen hin erstrecken.

Es können aber auch in den anderen Ausführungsformen, in Abwandlung zu den Darstellungen, das Bremsengehäuse 22a, das Kupplungsgehäuse 23e, das Wandlergehäuse 24f, das Getriebegehäuse 25e und/oder eine sonstige Kammer, in welcher das lichtstabilisierte dynamische Material LSDM eingeschlossen ist, mit Kühlrippen 31 versehene sein, die sich nach außen hin erstrecken.

## Patentansprüche

1. Antriebsvorrichtung, aufweisend wenigstens einen Motor (M1-M6) und wenigstens eine weitere Antriebskomponente aus der Gruppe von einem Getriebe, einem Drehmomentwandler, einer Kupplung und/oder einer Bremse (B1-B6), und aufweisend eine Steuervorrichtung (10a), die ausgebildet ist zum automatischen Ansteuern des wenigstens einen Motors (M1-M6), wobei der wenigstens eine Motor (M1-M6) und/oder die wenigstens eine weitere Antriebskomponente (20) ein die Drehmomentübertragung veränderndes Steuermittel (21) aufweist, **dadurch gekennzeichnet, dass** das Steuermittel (21) wenigstens ein Leuchtmittel (21.1) und einen die Drehmomentübertragung beeinflussenden Werkstoff (21.2), der wenigstens ein lichtstabilisiertes dynamisches Material (LSDM) aufweist, umfasst, wobei das Steuermittel (21) eingerichtet ist, die Drehmomentübertragung durch Ansteuern des Leuchtmittels (21.1), welches auf das lichtstabilisierte dynamische Material (LSDM) einstrahlt, zu verändern.

2. Antriebsvorrichtung nach Anspruch 1, **dadurch gekennzeichnet, dass** das die Drehmomentübertragung verändernde Steuermittel (21) wenigstens einer der Bremsen (22) der Antriebsvorrichtung (1) zugeordnet ist, wobei die jeweilige Bremse (22) ein an den zugeordneten Motor (M1-M6) drehmomentgekoppeltes, in einem Bremsengehäuse (22a) der Bremse (22) drehbar gelagertes Bremsglied (22b) aufweist, welches erste Bremsübertragungsstrukturen (22c) aufweist, und das Bremsengehäuse (22a) zweite Bremsübertragungsstrukturen (22d) aufweist, wobei die ersten Bremsübertragungsstrukturen (22c) mit den zweiten Bremsübertragungsstrukturen (22d) über den Werkstoff (21.2), der das wenigstens eine lichtstabilisierte dynamische Material (LSDM) aufweist, in Kontakt sind, um in Abhängigkeit des von den Leuchtmitteln (21.1) in das lichtstabilisierte dynamische Material (LSDM) eingestrahlten Lichtes die Drehmomentübertragung zwischen den ersten Bremsübertragungsstrukturen (22c) und den zweiten Bremsübertragungsstrukturen (22d) zu steuern.

3. Antriebsvorrichtung nach Anspruch 1 oder 2, **dadurch gekennzeichnet, dass** das die Drehmomentübertragung verändernde Steuermittel (21) wenigstens einer Kupplung (23) der Antriebsvorrichtung (1) zugeordnet ist, wobei die Kupplung (23) ein an den zugeordneten Motor (M1-M6) drehmomentgekoppeltes, in einem Kupplungsgehäuse (23e) der Kupplung (23) drehbar gelagertes erstes Kupplungsglied (23a) aufweist, welches erste Kupplungsübertragungsstrukturen (23c) aufweist, und ein in dem Kupplungsgehäuse (23e) der Kupplung (23) drehbar gelagertes zweites Kupplungsglied (23b) aufweist, welches zweite Kupplungsübertragungsstrukturen (23d) aufweist, wobei die ersten Kupplungsübertragungsstrukturen (23c) mit den zweiten Kupplungsübertragungsstrukturen (23d) über den Werkstoff (21.2), der das wenigstens eine lichtstabilisierte dynamische Material (LSDM) aufweist, in Kontakt sind, um in Abhängigkeit des von den Leuchtmitteln (21.1) in das lichtstabilisierte dynamische Material (LSDM) eingestrahlten Lichtes die Drehmomentübertragung zwischen den ersten Kupplungsübertragungsstrukturen (23c) und den zweiten Kupplungsübertragungsstrukturen (23d) zu steuern.

4. Antriebsvorrichtung nach einem der Ansprüche 1 bis 3, **dadurch gekennzeichnet, dass** das die Drehmomentübertragung verändernde Steuermittel (21) wenigstens einem Drehmomentwandler (24) der Antriebsvorrichtung (1) zugeordnet ist, wobei der Drehmomentwandler (24) ein an den zugeordneten Motor (M1-M6) drehmomentgekoppeltes, in einem Wandlergehäuse (24f) des Drehmomentwandlers (24) drehbar gelagertes erstes Wandlerglied (24a) aufweist, welches erste Wandlerübertragungsstrukturen (24c) aufweist, und ein in dem Wandlergehäuse (24f) des Drehmomentwandlers (24) drehbar gelagertes zweites Wandlerglied (24b) aufweist, welches zweite Wandlerübertragungsstrukturen (24d) aufweist, und das Wandlergehäuse (24f) dritte Wandlerübertragungsstrukturen (24g) aufweist, wobei die ersten Wandlerübertragungsstrukturen (24c) mit den zweiten Wandlerübertragungsstrukturen (24d) und dritten Wandlerübertragungsstrukturen (24g) über den Werkstoff (21.2), der das wenigstens eine lichtstabilisierte dynamische Material (LSDM) aufweist, in Kontakt sind, um in Abhängigkeit des von den Leuchtmitteln (21.1) in das lichtstabilisierte dynamische Material (LSDM) eingestrahlten Lichtes die Drehmomentübertragung zwischen den ersten Wandlerübertragungsstrukturen (24c) und den zweiten Wandlerübertragungsstrukturen (24d) zu steuern.

5. Antriebsvorrichtung nach einem der Ansprüche 1 bis 4, **dadurch gekennzeichnet, dass** das die Drehmomentübertragung verändernde Steuermittel (21) wenigstens einem Getriebe (25) der Antriebsvorrichtung (1) zugeordnet ist, wobei das Getriebe (25) ein an den zugeordneten Motor (M1-M6) drehmomentgekoppeltes, in einem Getriebegehäuse (25e) des Getriebes (25) drehbar gelagertes Getriebeglied (25a) aufweist, welches erste Getriebeübertragungsstrukturen (25b) aufweist, und im Getriebegehäuse (25e) wenigstens eine Übersetzungsstufe (25c) angeordnet ist, die zweite Getriebeübertragungsstrukturen (25d) aufweist, wobei die ersten Getriebeübertragungsstrukturen (25b) mit den zweiten Getriebeübertragungsstrukturen (25d) über den Werkstoff (21.2), der das wenigstens eine lichtstabilisierte dynamische Material (LSDM) aufweist, in Kontakt sind, um in Abhängigkeit des von den Leuchtmitteln (21.1) in das lichtstabilisierte dynamische Material (LSDM) eingestrahlten Lichtes die Drehmomentübertragung zwischen den ersten Getriebeübertragungsstrukturen (25b) und den zweiten Getriebeübertragungsstrukturen (25d) zu steuern.

6. Antriebsvorrichtung nach einem der Ansprüche 1 bis 5, **dadurch gekennzeichnet, dass** das die Drehmomentübertragung verändernde Steuermittel (21) dem wenigstens einen Motor (M1-M6) zugeordnet ist, wobei der wenigstens eine Motor (M1-M6) ein an die zugeordnete Motorwelle (26a) drehmomentgekoppeltes, in einem Motorgehäuse (26e) des Motors (M1-M6) drehbares Drehmomentglied (26b) aufweist, welches erste Motormomentübertragungsstrukturen (26c) aufweist, und die Motorwelle (26a) zweite Motormomentübertragungsstrukturen (26d) aufweist, wobei die ersten Motormomentübertragungsstrukturen (26c) mit den zweiten Motormomentübertragungsstrukturen (26d) über den Werkstoff (21.2), der das wenigstens eine lichtstabilisierte dynamische Material (LSDM) aufweist, in Kontakt sind, um in Abhängigkeit des von den Leuchtmitteln (21.1) in das lichtstabilisierte dynamische Material (LSDM) eingestrahlten Lichtes die Drehmomentübertragung zwischen den ersten Motormomentübertragungsstrukturen (26c) und den zweiten Motormomentübertragungsstrukturen (26d) zu steuern.

7. Antriebsvorrichtung nach einem der Ansprüche 1 bis 6, **dadurch gekennzeichnet, dass** das wenigstens eine Leuchtmittel (21.1) eine innerhalb des Bremsengehäuses (22a), innerhalb des Kupplungsgehäuses (23e), innerhalb des Wandlergehäuses (24f), innerhalb des Getriebegehäuses (25e) und/oder innerhalb des Motorgehäuses (26e) angeordnete LED ist, die elektrisch von außen angesteuert wird.

8. Antriebsvorrichtung nach einem der Ansprüche 1 bis 6, **dadurch gekennzeichnet, dass** das wenigstens eine Leuchtmittel (21.1) eine außerhalb eines lichtdurchlässigen Bremsengehäuses (22a), außerhalb eines lichtdurchlässigen Kupplungsgehäuses (23e), außerhalb eines lichtdurchlässigen Wandlergehäuses (24f), außerhalb eines lichtdurchlässigen Getriebegehäuses (25e) und/oder außerhalb eines lichtdurchlässigen Motorgehäuses (26e) angeordnete LED ist, wobei das von der wenigstens einen LED ausgesandte Licht in das lichtstabilisierte dynamische Material (LSDM) von außen einstrahlt.

9. Antriebsvorrichtung nach einem der Ansprüche 1 bis 8, **dadurch gekennzeichnet, dass** die ersten und zweiten Bremsübertragungsstrukturen (22c, 22d), die ersten und zweiten Kupplungsübertragungsstrukturen (23c, 23d), die ersten, zweiten und dritten Wandlerübertragungsstrukturen (24c, 24d, 24g), die ersten und zweiten Getriebeübertragungsstrukturen (25b, 25d) und/oder die ersten und zweiten Motormomentübertragungsstrukturen (26c, 26d) Vorsprünge, insbesondere schaufelförmige oder wellenförmige Vorsprünge aufweisen, welche in das lichtstabilisierte dynamische Material (LSDM) hineinragen.

10. Antriebsvorrichtung nach einem der Ansprüche 1 bis 9, **dadurch gekennzeichnet, dass** das Bremsengehäuse (22a), das Kupplungsgehäuse (23e), das Wandlergehäuse (24f), das Getriebegehäuse (25e), das Motorgehäuse (26e) und/oder eine sonstige Kammer, in welcher das lichtstabilisierte dynamische Material (LSDM) eingeschlossen ist, mit Kühlrippen (31) versehene ist, die sich nach außen hin erstrecken, oder in einer Kammerwand der Kammer oder in einer Gehäusewand des jeweiligen Gehäuses Kühlkanäle (30) ausgebildet sind, in denen eine Kühlflüssigkeit zirkuliert.

11. Roboter, aufweisend einen Roboterarm (9) mit mehreren Gelenken (L1-L6) und mehreren Gliedern (G1-G7), die durch die Bewegungen der Gelenke (L1-L6) des Roboterarms (9) gegeneinander verstellbar sind, wobei jedem angetriebenen Gelenk (L1-L6) eine Antriebsvorrichtung (1) nach einem der Ansprüche 1 bis 10 zugeordnet ist und diese jeweilige Antriebsvorrichtung (1) ausgebildet ist, das ihr zugeordnete Gelenk (L1-L6) des Roboterarms (9) zu verstellen und zwar durch jeweiliges automatisches Ansteuern des Motors (M1-M6) der jeweiligen Antriebsvorrichtung (1), wobei die Steuervorrichtungen (10a) eine Robotersteuerung (10a) umfassen, die ausgebildet ist zum automatischen Ansteuern der Motoren (M1-M6), um die Glieder (G1-G7) des Roboterarms (9) durch angetriebenes Bewegen der Gelenke (L1-L6) automatisch und individuell gegeneinander zu verstellen.

## Claims

1. Drive device, having at least one motor (M1-M6) and at least one further drive component from the group of a gearing, a torque converter, a clutch and/or a brake (B1-B6), and having a control device (10a) designed to automatically actuate the at least one motor (M1-M6), wherein the at least one motor (M1-M6) and/or the at least one further drive component (20) have/has a control means (21) which changes the torque transmission, **characterized in that** the control means (21) comprises at least one lamp (21.1) and a material (21.2) which influences the torque transmission and comprises at least one light-stabilized dynamic material (LSDM), wherein the control means (21) is configured to change the torque transmission through actuation of the lamp (21.1), which radiates onto the light-stabilized dynamic material (LSDM).

2. Drive device according to Claim 1, **characterized in that** the control means (21) which changes the torque transmission is assigned to at least one of the brakes (22) of the drive device (1), wherein the respective brake (22) has a brake member (22b) which is coupled to the assigned motor (M1-M6) in terms of torque, is rotatably mounted in a brake housing (22a) of the brake (22) and has first brake transmission structures (22c), and the brake housing (22a) has second brake transmission structures (22d), wherein the first brake transmission structures (22c) are in contact with the second brake transmission structures (22d) via the material (21.2) comprising the at least one light-stabilized dynamic material (LSDM), in order to control the torque transmission between the first brake transmission structures (22c) and the second brake transmission structures (22d) in dependence on the light radiated into the light-stabilized dynamic material (LSDM) by the lamps (21.1).

3. Drive device according to Claim 1 or 2, **characterized in that** the control means (21) which changes the torque transmission is assigned to at least one clutch (23) of the drive device (1), wherein the clutch (23) has a first clutch member (23a) which is coupled to the assigned motor (M1-M6) in terms of torque, is rotatably mounted in a clutch housing (23e) of the clutch (23) and has first clutch transmission structures (23c), and has a second clutch member (23b) which is rotatably mounted in the clutch housing (23e) of the clutch (23) and has second clutch transmission structures (23d), wherein the first clutch transmission structures (23c) are in contact with the second clutch transmission structures (23d) via the material (21.2) comprising the at least one light-stabilized dynamic material (LSDM), in order to control the torque transmission between the first clutch transmission structures (23c) and the second clutch transmission structures (23d) in dependence on the light radiated into the light-stabilized dynamic material (LSDM) by the lamps (21.1).

4. Drive device according to one of Claims 1 to 3, **characterized in that** the control means (21) which changes the torque transmission is assigned to at least one torque converter (24) of the drive device (1), wherein the torque converter (24) has a first converter member (24a) which is coupled to the assigned motor (M1-M6) in terms of torque, is rotatably mounted in a converter housing (24f) of the torque converter (24) and has first converter transmission structures (24c), and has a second converter member (24b) which is rotatably mounted in the converter housing (24f) of the torque converter (24) and has second converter transmission structures (24d), and the converter housing (24f) has third converter transmission structures (24g), wherein the first converter transmission structures (24c) are in contact with the second converter transmission structures (24d) and third converter transmission structures (24g) via the material (21.2) comprising the at least one light-stabilized dynamic material (LSDM), in order to control the torque transmission between the first converter transmission structures (24c) and the second converter transmission structures (24d) in dependence on the light radiated into the light-stabilized dynamic material (LSDM) by the lamps (21.1) .

5. Drive device according to one of Claims 1 to 4, **characterized in that** the control means (21) which changes the torque transmission is assigned to at least one gearing (25) of the drive device (1), wherein the gearing (25) has a gearing member (25a) which is coupled to the assigned motor (M1-M6) in terms of torque, is rotatably mounted in a gearing housing (25e) of the gearing (25) and has first gearing transmission structures (25b), and at least one transmission ratio stage (25c) is arranged in the gearing housing (25e) and has second gearing transmission structures (25d), wherein the first gearing transmission structures (25b) are in contact with the second gearing transmission structures (25d) via the material (21.2) comprising the at least one light-stabilized dynamic material (LSDM), in order to control the torque transmission between the first gearing transmission structures (25b) and the second gearing transmission structures (25d) in dependence on the light radiated into the light-stabilized dynamic material (LSDM) by the lamps (21.1) .

6. Drive device according to one of Claims 1 to 5, **characterized in that** the control means (21) which changes the torque transmission is assigned to the at least one motor (M1-M6), wherein the at least one motor (M1-M6) has a torque member (26b) which is coupled to the assigned motor shaft (26a) in terms of torque, is rotatable in a motor housing (26e) of the motor (M1-M6) and has first motor torque transmission structures (26c), and the motor shaft (26a) has second motor torque transmission structures (26d), wherein the first motor torque transmission structures (26c) are in contact with the second motor torque transmission structures (26d) via the material (21.2) comprising the at least one light-stabilized dynamic material (LSDM), in order to control the torque transmission between the first motor torque transmission structures (26c) and the second motor torque transmission structures (26d) in dependence on the light radiated into the light-stabilized dynamic material (LSDM) by the lamps (21.1).

7. Drive device according to one of Claims 1 to 6, **characterized in that** the at least one lamp (21.1) is an LED which is arranged within the brake housing (22a), within the clutch housing (23e), within the converter housing (24f), within the gearing housing (25e) and/or within the motor housing (26e) and is electrically actuated from the outside.

8. Drive device according to one of Claims 1 to 6, **characterized in that** the at least one lamp (21.1) is an LED which is arranged outside a light-permeable brake housing (22a), outside a light-permeable clutch housing (23e), outside a light-permeable converter housing (24f), outside a light-permeable gearing housing (25e) and/or outside a light-permeable motor housing (26e), wherein the light emitted by the at least one LED radiates into the light-stabilized dynamic material (LSDM) from the outside.

9. Drive device according to one of Claims 1 to 8, **characterized in that** the first and second brake transmission structures (22c, 22d), the first and second clutch transmission structures (23c, 23d), the first, second and third converter transmission structures (24c, 24d, 24g), the first and second gearing transmission structures (25b, 25d) and/or the first and second motor torque transmission structures (26c, 26d) have projections, in particular scoop-shaped or corrugated projections, which project into the light-stabilized dynamic material (LSDM).

10. Drive device according to one of Claims 1 to 9, **characterized in that** the brake housing (22a), the clutch housing (23e), the converter housing (24f), the gearing housing (25e), the motor housing (26e) and/or another chamber in which the light-stabilized dynamic material (LSDM) is enclosed are/is provided with cooling ribs (31) which extend outwards, or cooling channels (30), in which a cooling liquid circulates, are formed in a chamber wall of the chamber or in a housing wall of the respective housing.

11. Robot, having a robot arm (9) with multiple joints (L1-L6) and multiple members (G1-G7) which are adjustable in relation to one another by the movements of the joints (L1-L6) of the robot arm (9), wherein each driven joint (L1-L6) is assigned a drive device (1) according to one of Claims 1 to 10 and this respective drive device (1) is designed to adjust that joint (L1-L6) of the robot arm (9) which is assigned thereto, specifically through respective automatic actuation of the motor (M1-M6) of the respective drive device (1), wherein the control devices (10a) comprise a robot controller (10a) designed to automatically actuate the motors (M1-M6) in order to automatically and individually adjust the members (G1-G7) of the robot arm (9) in relation to one another through driven movement of the joints (L1-L6).

## Revendications

1. Dispositif d'entraînement, présentant au moins un moteur (M1-M6) et au moins un composant d'entraînement supplémentaire issu du groupe composé d'un engrenage, d'un convertisseur de couple, d'un accouplement et/ou d'un frein (B1-B6), et présentant un dispositif de commande (10a) qui est réalisé pour le pilotage automatique dudit au moins un moteur (M1-M6), dans lequel ledit au moins un moteur (M1-M6) et/ou ledit au moins un composant d'entraînement supplémentaire (20) présente(nt) un moyen de commande (21) modifiant la transmission de couple,
**caractérisé en ce que** le moyen de commande (21) comprend au moins un moyen d'éclairage (21.1) et un matériau (21.2) affectant la transmission de couple qui présente au moins un matériau dynamique stable à la lumière (LSDM), dans lequel le moyen de commande (21) est conçu pour modifier la transmission de couple en pilotant le moyen d'éclairage (21.1) qui irradie le matériau dynamique stable à la lumière (LSDM).

2. Dispositif d'entraînement selon la revendication 1, **caractérisé en ce que** le moyen de commande (21) modifiant la transmission de couple est associé à au moins l'un des freins (22) du dispositif d'entraînement (1), dans lequel le frein respectif (22) présente un élément de freinage (22b) monté rotatif dans un carter de frein (22a) du frein (22), accouplé en couple au moteur associé (M1-M6) et présentant des premières structures de transmission de frein (22c), et le carter de frein (22a) présente des deuxièmes structures de transmission de frein (22d), dans lequel les premières structures de transmission de frein (22c) sont en contact avec les deuxièmes structures de transmission de frein (22d) par l'intermédiaire du matériau (21.2) qui présente ledit au moins un matériau dynamique stable à la lumière (LSDM) afin de commander la transmission de couple entre les premières structures de transmission de frein (22c) et les deuxièmes structures de transmission de frein (22d) en fonction de la lumière irradiée par les moyens d'éclairage (21.1) dans le matériau dynamique stable à la lumière (LSDM).

3. Dispositif d'entraînement selon la revendication 1 ou 2, **caractérisé en ce que** le moyen de commande (21) modifiant la transmission de couple est associé à au moins un accouplement (23) du dispositif d'entraînement (1), dans lequel l'accouplement (23) présente un premier élément d'accouplement (23a) monté rotatif dans un carter d'accouplement (23e) de l'accouplement (23), accouplé en couple au moteur associé (M1-M6), présentant des premières structures de transmission d'accouplement (23c), et un deuxième élément d'accouplement (23b) monté rotatif dans le carter d'accouplement (23e) de l'accouplement (23), présentant des deuxièmes structures de transmission d'accouplement (23d),
dans lequel les premières structures de transmission d'accouplement (23c) sont en contact avec les deuxièmes structures de transmission d'accouplement (23d) par l'intermédiaire du matériau (21.2) qui présente ledit au moins un matériau dynamique stable à la lumière (LSDM) afin de commander la transmission de couple entre les premières structures de transmission d'accouplement (23c) et les deuxièmes structures de transmission d'accouplement (23d) en fonction de la lumière irradiée par les moyens d'éclairage (21.1) dans le matériau dynamique stable à la lumière (LSDM).

4. Dispositif d'entraînement selon l'une quelconque des revendications 1 à 3, **caractérisé en ce que** le moyen de commande (21) modifiant la transmission de couple est associé à au moins un convertisseur de couple (24) du dispositif d'entraînement (1), dans lequel le convertisseur de couple (24) présente un premier élément de convertisseur (24a) monté rotatif dans un carter de convertisseur (24f) du convertisseur de couple (24), accouplé en couple au moteur associé (M1-M6), présentant des premières structures de transmission de convertisseur (24c), et un deuxième élément de convertisseur (24b) monté rotatif dans le carter de convertisseur (24f) du convertisseur de couple (24), présentant des deuxièmes structures de transmission de convertisseur (24d), et le carter de convertisseur (24f) présente des troisièmes structures de transmission de couple (24g), dans lequel les premières structures de transmission de convertisseur (24c) sont en contact avec les deuxièmes structures de transmission de convertisseur (24d) et les troisièmes structures de transmission de convertisseur (24g) par l'intermédiaire du matériau (21.2) qui présente ledit au moins un matériau dynamique stable à la lumière (LSDM) afin de commander la transmission de couple entre les premières structures de transmission de convertisseur (24c) et les deuxièmes structures de transmission de convertisseur (24d) en fonction de la lumière irradiée par les moyens d'éclairage (21.1) dans le matériau dynamique stable à la lumière (LSDM).

5. Dispositif d'entraînement selon l'une quelconque des revendications 1 à 4, **caractérisé en ce que** le moyen de commande (21) modifiant la transmission de couple est associé à au moins un engrenage (25) du dispositif d'entraînement (1), dans lequel l'engrenage (25) présente un élément d'engrenage (25a) monté rotatif dans un carter d'engrenage (25e) de l'engrenage (25), accouplé en couplé au moteur associé (M1-M6), présentant des premières structures de transmission d'engrenage (25b), et dans le carter d'engrenage (25e) est disposé au moins un rapport de transmission (25c) qui présente des deuxièmes structures de transmission d'engrenage (25d), dans lequel les premières structures de transmission d'engrenage (25b) sont en contact avec les deuxièmes structures de transmission d'engrenage (25d) par l'intermédiaire du matériau (21.2) qui présente ledit au moins un matériau dynamique stable à la lumière (LSDM) afin de commander la transmission de couple entre les premières structures de transmission d'engrenage (25b) et les deuxièmes structures de transmission d'engrenage (25d) en fonction de la lumière irradiée par les moyens d'éclairage (21.1) dans le matériau dynamique stable à la lumière (LSDM).

6. Dispositif d'entraînement selon l'une quelconque des revendications 1 à 5, **caractérisé en ce que** le moyen de commande (21) modifiant la transmission de couple est associé audit au moins un moteur (M1-M6), dans lequel ledit au moins un moteur (M1-M6) présente un élément de couple (26b) pouvant tourner dans un carter de moteur (26e) du moteur (M1-M6) accouplé en couple à l'arbre moteur (26a) associé, présentant des premières structures de transmission de couple moteur (26c), et l'arbre moteur (26a) présente des deuxièmes structures de transmission de couple moteur (26d), dans lequel les premières structures de transmission de couple moteur (26c) sont en contact avec les deuxièmes structures de transmission de couple moteur (26d) par l'intermédiaire du matériau (21.2) qui présente ledit au moins un matériau dynamique stable à la lumière (LSDM) afin de commander la transmission de couple entre les premières structures de transmission de couple moteur (26c) et les deuxièmes structures de transmission de couple moteur (26d) en fonction de la lumière irradiée par les moyens d'éclairage (21.1) dans le matériau dynamique stable à la lumière (LSDM).

7. Dispositif d'entraînement selon l'une quelconque des revendications 1 à 6, **caractérisé en ce que** ledit au moins un moyen d'éclairage (21.1) est une LED disposée à l'intérieur du carter de frein (22a), à l'intérieur du carter d'accouplement (23e), à l'intérieur du carter de convertisseur (24f), à l'intérieur du carter d'engrenage (25e) et/ou à l'intérieur du carter de moteur (26e) et qui est pilotée électriquement depuis l'extérieur.

8. Dispositif d'entraînement selon l'une quelconque des revendications 1 à 6, **caractérisé en ce que** ledit au moins un moyen d'éclairage (21.1) est une LED disposé à l'extérieur d'un carter de frein (22a) transparent, à l'extérieur d'un carter d'accouplement (23e) transparent, à l'extérieur d'un carter de convertisseur (24f) transparent, à l'extérieur d'un carter d'engrenage (25e) transparent et/ou à l'extérieur d'un carter de moteur (26e) transparent, dans lequel la lumière émise par ladite au moins une LED est incidente depuis l'extérieur dans le matériau dynamique stable à la lumière (LSDM).

9. Dispositif d'entraînement selon l'une quelconque des revendications 1 à 8, **caractérisé en ce que** les premières et deuxièmes structures de transmission de frein (22c, 22d), les premières et deuxièmes structures de transmission d'accouplement (23c, 23d), les premières, deuxièmes et troisièmes structures de transmission de convertisseur (24c, 24d, 24g), les premières et deuxièmes structures de transmission d'engrenage (25b, 25d) et/ou les premières et deuxièmes structures de transmission de couple moteur (26c, 26d) présentent des saillies, en particulier des saillies en forme de pales ou ondulées qui dépassent dans le matériau dynamique stable à la lumière (LSDM).

10. Dispositif d'entraînement selon l'une quelconque des revendications 1 à 9, **caractérisé en ce que** le carter de frein (22a), le carter d'accouplement (23e), le carter de convertisseur (24f), le carter d'engrenage (25e), le carter de moteur (26e) et/ou tout autre compartiment dans lequel est enfermé le matériau dynamique stable à la lumière (LSDM) sont munis d'ailettes de refroidissement (31) qui s'étendent vers l'extérieur, ou des ailettes de refroidissement (30) dans lesquelles circulent un liquide de refroidissement sont réalisées dans une paroi de compartiment du compartiment ou dans une paroi de carter du carter respectif.

11. Robot, présentant un bras de robot (9) pourvu de plusieurs articulations (L1-L6) et de plusieurs membres (G1-G7) qui sont réglables les uns par rapport aux autres par les mouvements des articulations (L1-L6) du bras de robot (9), dans lequel un dispositif d'entraînement (1) selon l'une quelconque des revendications 1 à 10 est associé à chaque articulation entraînée (L1-L6), et ledit dispositif d'entraînement (1) respectif est réalisé pour régler l'articulation (L1-L6) du bras de robot (9) qui lui est associée, notamment en pilotant respectivement automatiquement le moteur (M1-M6) du dispositif d'entraînement (1) respectif,
dans lequel les dispositifs de commande (10a) comprennent une commande de robot (10a) qui est réalisée pour piloter automatiquement les moteurs (M1-M6) afin de régler automatiquement et individuellement les articulations (G1-G7) du bras de robot (9) les unes par rapport aux autres par un mouvement entraîné des articulations (L1-L6).
